# EUROPEAN PATENT SPECIFICATION

(11) **EP 0 587 607 B1**
(45) Date of publication and mention of the grant of the patent: **20.11.1996**
(21) Application number: 92910573.2
(22) Date of filing: 29.05.1992
(51) Int. Cl.: F01K 25/00

(54) **ENERGY SUPPLY SYSTEM**
ENERGIEERZEUGUNGSSYSTEM
SYSTEME DE PRODUCTION D'ENERGIE

(30) Priority: 29.05.1991 GB 9111523
(43) Date of publication of application: 23.03.1994
(73) Proprietor: Best, Frederick George, Maidenhead, Berkshire SL6 7AR (GB)
(72) Inventor: Best, Frederick George, Maidenhead, Berkshire SL6 7AR (GB)
(74) Representative: Singleton, Jeffrey
(86) International application number: GB9200968
(87) International publication number: WO9221861

(56) References cited:
- EP-A- 0 084 815
- GB-A- 160 517
- GB-A- 1 212 905
- US-A- 4 353 214
- US-A- 4 910 963
- B.W.K. Brennstoff-Wärme-Kraft, vol. 34, nos. 8-9, August-September 1982, (Würzburg, DE), H.J. STERNFELD et al.: "Wirkungsgrade und Kosten bei der Spitzenstromerzeugung aus Wasserstoff", pages 401-403
- B.W.K. Brennstoff-Wärme-Kraft, vol. 34, no. 7, July 1982, (Würzburg, DE), H. WOJKOWSKY et al.: "Wärmekraftprozesse für Wasserstoff-Spitzenlast-Kraftwerke", pages 351-354

## Description

The present invention relates to an energy supply system, which has particular application to domestic installations.

EP-A-84815 and Brennst.-Warme-Kraft 3 4 (1982) Nr. 8-9, August/September describe energy supply systems, namely power stations comprising a steam generator driving a turbine to produce mechanical energy, and means adapted to be powered by the turbine for producing electrolysis of water to separate in into its constituent parts.

In the context of the present invention the term alternative energy source refers to all non-fossil fuels such as wind generated energy, solar energy, energy derived from waste disposal, energy recovered from flue gases or other waste fluids, and energy derived from the decomposition of vegetable or other matter.

In one aspect, the present invention provides an energy supply system as set out in claim 1.

The heat source may be in the form of an alternative energy source, as hereinbefore defined, or combinations thereof.

Preferably, the energy-conversion means may be an engine in the form of a positive displacement device.

Preferably, an electrical generator uses the mechanical energy produced by the energy-conversion means to generate electrical energy, which powers said electrolysis of water.

Possibly, the energy-creating recombination of the constituent parts of the water may be implemented using an underwater burner, whereby the energy created is in the form of heat.

Preferably, the energy-creating recombination of constituent parts of the water takes place using a fuel cell, whereby the energy created is in the form of electricity.

Embodiments of the invention are hereinafter described with reference to the accompanying drawings, in which:
Figure 1 represents a schematic view of an embodiment of the invention in use with a solar heating device as the heat source; and
Figure 2 shows a schematic of an underwater burner used when reacting together hydrogen and oxygen.

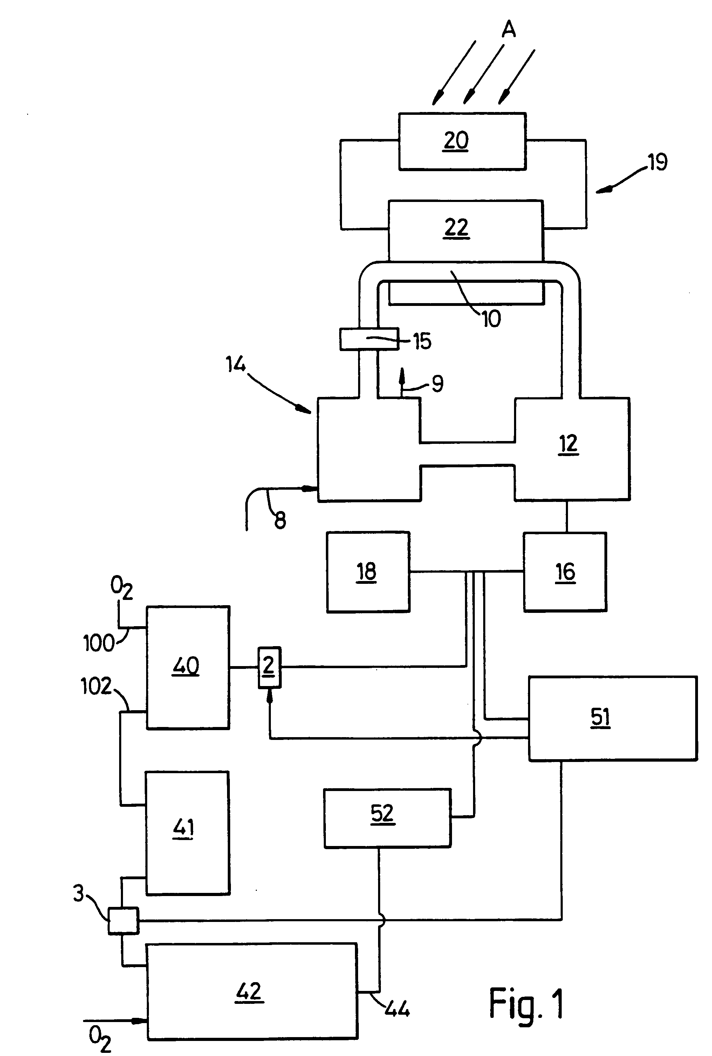

In an embodiment of the invention as illustrated in Figure 1, the system has two closed fluid-flow circuits. A heat source is provided by a first fluid-flow circuit, a heating circuit, generally denoted 19, which comprises a reservoir 22 of liquid, in series with a solar heating element 20. The solar heating element 20 is powered by solar energy denoted A, the solar energy A serving to heat the liquid contained therein and consequentially the liquid contained in the reservoir 22.

The second circuit, the working circuit, generally denoted 1, comprises a vaporising chamber 10, which is immersed in the reservoir 22 of the heating circuit 19, and is in series with an engine 12 and a condenser 14, the condenser 14 thus also being connected to the vaporising chamber 10 via feed means 15. The condenser 14 is further provided with a cold water inlet 8 which is operable to feed cold water from an external source (not shown) on to the coil of the condenser 14. The cold water serves to cool the coil of the condenser 14, after which the resulting heated water exits the condenser 14 via hot water outlet 9. The engine 12 is further connected to an electrical generator 16, the output of which is operatively connected to a load 18 and an electrolysis plant 40, via relay 2. The output of the electrical generator 16 is also monitored by a controller 51, which inter alia, controls the relay 2. The precise nature of feed means 15 selected depends on what type of engine 12 is used. For example, if a positive displacement device is selected then the feed means 15 may comprise an auxiliary piston attached to, and driven by, the engine piston. On the other hand, if a turbine is used, then an electric pump driven by the electrical generator 16 might be used. Of course, it will be appreciated that the positive displacement device and the turbine are not mutually exclusive.

The electrolysis plant 40, which is of conventional construction, carries out the electrolysis of water and is provided with an oxygen outlet 100 and a hydrogen outlet 102. The hydrogen outlet 102 is connected to a suitable container 41, which itself is in communication with a fuel cell 42 via a valve 3. The valve 3 is also controlled by controller 51. The fuel cell 42 is operable to provide electrical power when hydrogen gas enters the fuel cell 42 via valve 3, in manner which is widely known. The power output 44 of the fuel cell 42 is connected to an electronic voltage regulator 52 which is operable to maintain the output voltage at a predetermined level.

In use, for example, in the domestic situation, the solar energy A heats up the liquid contained in the heating circuit 19 and thus also heats the liquid in the reservoir 22. The heating of liquid in the reservoir 22 vaporises the liquid in the vaporising chamber 10. The resultant pressure build-up in the vaporising chamber 10 causes high pressure vaporised liquid 3 to drive the engine 12, and hence the connected electrical generator 16. The lower pressure vapour 4 which is expelled from the turbine 12 is condensed in the condenser 14 and passed as liquid 5 back into the higher pressure vaporising chamber 10, via the feed means 15.

If the solar energy A is present in sufficient quantities, then the controller 51 establishes that the present load requirements of the household are below the power currently being produced (ie the voltage output of electrical generator is above a certain threshold value), in which case the excess power is channelled via rely 2 to the electrolysis plant 40, where water is then electrolysed. The evolved hydrogen exits via outlet 102 and is stored in the hydrogen store 41.

The oxygen gas which is evolved from oxygen outlet 100 may be vented to the atmosphere. In the case when the heat source is derived not from the sun but, for example, from waste material then the oxygen may assist in the combustion thereof. Alternatively, the oxygen may simply stored in a similar way to the hydrogen for either possible use in the fuel cell or possible sale.

If the controller 51 establishes that the solar energy source is insufficient to meet the present load requirements of the household (ie the output voltage of the generator falls below a predetermined threshold), the controller 51 opens the valve 3, thus allowing hydrogen to flow into the fuel cell 42. The resultant power produced by the fuel cell 42 enables the voltage regulator 52 to compensate for the shortfall in the available solar energy and maintain the output power of the generator 16 in step with the household power requirements.

In another embodiment of the invention, the voltage regulator 52 may be replaced by an electric motor in series with the generator 16. In another embodiment of the invention, where the heat storage properties of the heating circuit 19 are not required, it may be omitted.

It will be appreciated by the skilled man that within the system just described, there are several heat sources which can be further exploited. For example, the cooling fluid flowing through the condenser via inlet 8 and outlet 9 may be used in numerous other domestic contexts, for example space heating. It may also be used to heat outside areas such as patios to keep free from ice or snow.

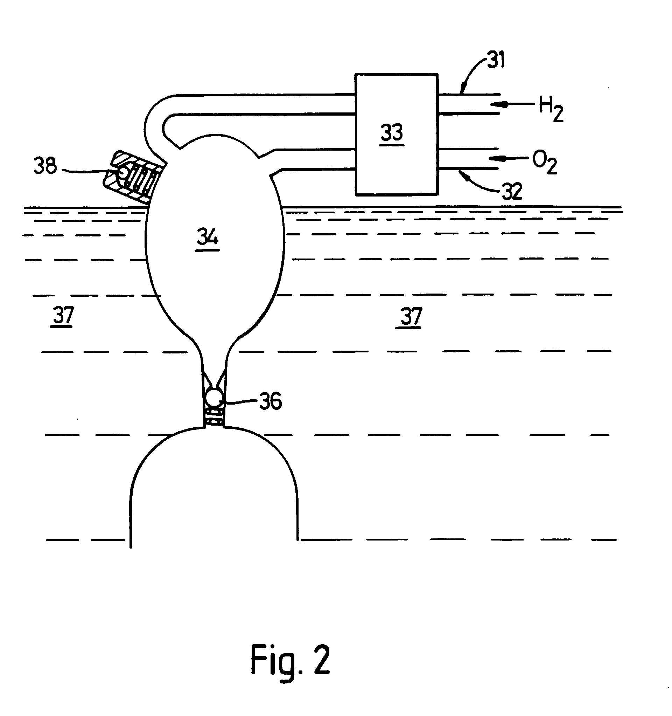

As an alternative to the fuel cell 42 arrangement hereinbefore described, an underwater burner of a type shown in Figure 2 may be utilized. Previously electrolysed hydrogen and oxygen gas are supplied by pipes 31 and 32 respectively into a metering device 33, which controls the ratios of hydrogen and oxygen flowing therethrough. The correct ratios of hydrogen and oxygen are then fed into a combustion chamber 34 lined with catalyst, which is submersed in water 37. The fluid may be water or any other suitable fluid. The combustion chamber 34 is shaped to ensure complete combustion and mixing of the gases. The combustion chamber 34 is further provided with an igniter which initiates the complete combustion of the gases, if complete combustion is not achieved spontaneously on mixing together the gases. The resultant mixture of water, water vapour and super-heated steam leaves the combustion chamber 34 by a conventional non-return valve 36. The heat energy generated during recombination serves to heat up the surrounding water 37 by convection and radiation from the gases in the combustion chamber 34. The surrounding fluid 37 can thus be a source of hot water on demand, the temperature thereof simply being controlled by the amount of hydrogen and oxygen to be re-combined. After combustion is complete a further non-return valve 38 allows air to bleed into the chamber 34 to prevent the formation of a vacuum therein. The formation of a vacuum in the chamber 34 would give rise to the risk of the combustion chamber 34 collapsing.

In another embodiment of the invention (not illustrated), where the heat source is provided by a furnace, it will be appreciated that the oxygen produced by the electrolysis plant 40 may be fed back to the furnace to aid further the operation of the furnace. In this respect, it is pointed out that hydrogen gas may similarly be used in this role, if desired or otherwise disposed of.

The electrolysis plant 40 and the fuel cell 42 may be embodied in a single unit. When the heating circuit 19 is omitted, it will be appreciated that the vaporising chamber may be directly heated by solar or other energy.

It will thus be understood that the present invention is suitable for use in all areas where it is desired to cut down on energy bills by making use of alternative energy sources. In domestic installations, the use of the invention may well dispense substantially with the need for conventional gas and electricity services. It will also be appreciated that distilled water will be a product of the energy-creating recombination of the hydrogen and oxygen, thereby providing a source of potable water which could dispense with the need for a basic potable supply to the dwelling. Furthermore, it will be seen that there are no pollutants generated by the system of the present invention, whereby the system is environmentally friendly.

## Claims

1. A domestic energy supply system comprising a vaporising chamber (10) containing a vaporisable liquid to which heat from a heat source (20) derived from an alternative energy source (A) is supplied to vaporise the liquid, the alternative energy source (A) being selected from a wind generated energy source, a solar energy source, a waste disposal energy source, energy recovered from flue gases or other waste fluids, energy derived from the decomposition of vegetable or other matter, any other non-fossil fuel source, or combinations thereof;
energy-conversion means (12) which is driven by the vaporised liquid from the vaporising chamber (10) to produce mechanical energy; a condenser (14) which condenses the vaporised liquid exiting from the energy-conversion means; feeds means (15) which returns the resulting condensate to the vaporising chamber (10); means (40) connected to the energy-conversion means adapted to be powered by at least a portion of the mechanical energy produced by the energy conversion means for producing electrolysis of water to separate it into its constituent parts; and means for subsequently recombining the constituent parts of the water to create energy consisting of a fuel cell by which the energy is created in the form of electricity or an underwater burner by which the energy is in the form of heat which heats the water surrounding the burner.

2. A domestic energy supply system according to claim 1, wherein the energy-conversion means is in the form of a turbine.

3. A domestic energy supply system according to claim 1, wherein the energy-conversion means is in the form of a positive displacement device.

4. A domestic energy supply system according to any one of claims 1 to 3 and further comprising an electrical generator which uses the mechanical energy produced by the energy-conversion means to generate electrical energy, which powers said electrolysis of water.

5. A domestic energy supply system according to any preceding claim,
wherein the alternative energy source is selected from a wind generated energy source, a solar energy source, a waste disposal energy source, energy derived from the decomposition of vegetable or other matter, or combinations thereof.

6. An energy supply system as in any preceding claim, further including an electrolysis plant operable to electrolyse water.

7. An energy supply system according to claim 6, wherein the system is further provided with regulation means, operable to monitor the output of the electrical generator, the regulation means being adapted when said power output falls below a first predetermined level to control the energy-creating recombination of the constituent parts of the water to compensate for the fall in output power, and further adapted when said power output exceeds the second predetermined level to initiate the operation of said electrolysis plant.

8. An energy supply system according to any one of the preceding claims comprising an underwater burner wherein the underwater burner comprises a combustion chamber lined with a catalyst and which is submersed in water.

## Patentansprüche

1. Haushaltsenergieversorgungssystem mit einer eine verdampfbare Flüsgigkeit enthaltenden Verdampfungskammer (10), der von einer Wärmequelle (20) aus einer alternativen Energiequelle (A) gewonnene Wärme zugeführt wird, um die Flüssigkeit zu verdampfen, wobei die alternative Energiequelle aus einer windangetriebenen energiequelle, einer Solarenergiequelle, einer Abfallverwertungsenergiequelle, Energie, die aus Abgasen oder anderen Abfall-Fluida zurückgewonnen wird, Energie, die aus der Zersetzung von Grünmasse oder anderen Stoffen gewonnen wird, jeder anderen Nicht-Fossilölquelle oder Kombinationen davon ausgewählt ist, mit einem Energiewandler (12), der von der verdampften Flüssigkeit aus der Verdampfungskammer (10) angetrieben wird, um mechanische Energie zu produzieren, mit einem Kondensator (14), der die aus dem Energiewandler austretende verdampfte Flüssigkeit Kondensiert, mit einer Beschickungsvorrichtung (15), die das resultierende Kondensat zu der Verdampfungskämmer (10) zurückführt, mit Vorrichtungen, die an den Energiewandler angeschlossen sind und die zum Antrieb mit zumindest einem Teil der von dem Energiewandler produzierten mechanischen Energie vorgesehen sind, um eine Elektrolyse von Wasser durchzuführen, um es in seine Bestandteile aufzuspalten, und mit Vorrichtungen zum nachfolgenden Rekombinieren der Bestandteile des Wassers, um Energie zu erzeugen, die aus einer Brennstoffzelle, bei der die Energie in Form von elektrischer Energie erzeugt wird, oder aus einem Unterwasserbrenner, bei der die Energie die Form von Wärme hat, welche das den Brenner umgebende Wasser aufheizt, bestehen.

2. Haushaltenenergieversorgungssystem nach Anspruch 1, **dadurch gekennzeichnet,** daß der Energiewandler als Turbine ausgebildet ist.

3. Haushaltsenergieversorgungssystem nach Anspruch 1, **dadurch gekennzeichnet,** daß der Energiewandler als Verdrängungsvorrichtung ausgebildet ist.

4. Haushatsenergieversorgungssystem nach einem der Ansprüche 1 bis 3, **dadurch gekennzeichnet,** daß weiterhin ein elektrischer Generator vorgesehen ist, der die von dem Energiewandler erzeugte mechanische Energie nutzt, um elekctische Energie zu erzeugen, welche die Elektrolyse des Wassers antreibt.

5. Haushaltsenergieversorgungssystem nach einem der voranstehenden Ansprüche, **dadurch gekennzeichnet,** daß die alternative Energiequelle aus einer windangetriebenen Energiequelle, einer Solarenergiequelle, einer Abfallverwertungsenergiequelle, Energie, die aus der Zersetzung von Grünmasse und anderen Stoffen gewonnen wird, und Kombinationen davon ausgewählt ist.

6. Energieversorgungssystem nach einem der voranstehenden Ansprüche, **dadurch gekennzeichnet,** daß weiterhin eine Elektrolyseanlage zum Elektrolysierens des Wassers vorgesehen ist.

7. Energieversorgungssystem nach Anspruch 6, **dadurch gekennzeichnet,** daß das System weiterhin mit Regelvorrichtungen zum Überwachen des Ausgangs des elektrischen Generators versehen ist, wobei die Regelvorrichtungen vorgesehen sind, die energieerzeugende Rekombination der Bestandteile des Wassers zu steuern, um den Abfall an Ausgangsleistung zu kompensieren, wenn die Ausgangsleistung unter ein erstes vorgegebenes Niveau fällt, und den Betrieb der Elektrolyseanlage zu starten wenn die Ausgangsleistung ein zweites vorgegebenes Niveau übersteigt.

8. Energieversorgungssystem nach einem der voranstehenden Ansprüche, **dadurch gekennzeichnet,** daß ein Unterwasserbrenner vorgesehen ist, wobei der Unterwasserbrenner eine Verbrennungskammer aufweist, die mit einem Katalysator ausgekleidet und die in das Wasser eingetaucht ist.

## Revendications

1. Système domestique d'alimentation en énergie comprenant une chambre de vaporisation (10) contenant un liquide vaporisable auquel on apporte de la chaleur provenant d'une source de chaleur (20) dérivée d'une source d'énergie alternative (A) pour vaporiser le liquide, la source d'énergie alternative (A) étant sélectionnée à partir d'une source d'énergie éolienne, d'une source d'énergie solaire, d'une source d'énergie produite par un procédé d'élimination des déchets, d'énergie récupérée à partir de gaz de combustion et d'autres fluides usagés, d'énergie dérivée de la décomposition de végétaux ou d'autres matières, de n'importe quelle autre source de combustible nonfossile, ou de leurs combinaisons ;
des moyens de conversion d'énergie (12) qui sont entraînés par le liquide vaporisé depuis la chambre de vaporisation (10) pour produire de l'énergie mécanique ; un condenseur (14) qui condense le liquide vaporisé sortant des moyens de conversion d'énergie ; des moyens d'alimentation (15) qui renvoient le condensat résultant à la chambre de vaporisation (10) ; des moyens (40) reliés aux moyens de conversion d'énergie adaptés pour être alimentés par au moins une partie de l'énergie mécanique produite par les moyens de conversion d'énergie pour produire une électrolyse de l'eau pour la séparer en ses composants ; et des moyens pour recombiner ultérieurement les composants de l'eau pour créer de l'énergie se composant d'une pile à combustible par laquelle est créée l'énergie sous la forme d'électricité ou d'un brûleur immergé par lequel l'énergie est sous forme de chaleur qui chauffe l'eau entourant le brûleur.

2. Système domestique d'alimentation en énergie selon la revendication 1, dans lequel les moyens de conversion d'énergie sont sous la forme d'une turbine.

3. Système domestique d'alimentation en énergie selon la revendication , dans lequel les moyens de conversion d'énergie sont sous la forme d'un dispositif à déplacement positif.

4. Système domestique d'alimentation en énergie selon l'une quelconque des revendications 1 à 3, et comprenant en outre un générateur électrique qui utilise l'énergie mécanique produite par les moyens de conversion d'énergie pour générer l'énergie électrique, qui alimente ladite électrolyse de l'eau.

5. Système domestique d'alimentation en énergie selon l'une quelconque des revendications précédentes, dans lequel la source d'énergie alternative est sélectionnée parmi une source d'énergie éolienne, une source d'énergie solaire, une source d'énergie produite par un procédé d'élimination des déchets, d'une énergie dérivée de la décomposition de végétaux ou d'autres matières, ou de leurs conbinaisons.

6. Système d'alimentation en énergie selon l'une quelconque des revendications précédentes, comprenant en outre une installation d'électrolyse fonctionnant pour l'électrolyse de l'eau.

7. Système d'alimentation en énergie selon la revendication 6, dans lequel le système est en outre muni de moyens de régulation, pouvant fonctionner pour surveiller la sortie du générateur électrique, les moyens de régulation étant adaptés lorsque ladite sortie de puissance tombe au-dessous d'un premier niveau prédéterminé pour commander la recombinaison créatrice d'énergie des composants de l'eau pour compenser la chute de la puissance de sortie, et adaptée en outre pour amorcer le fonctionnement de ladite installation d'électrolyse.

8. Système d'alimentation en énergie selon l'une quelconque des revendications précédentes, comprenant un brûleur immergé dans lequel le brûleur immergé comprend une chambre de combustion garnie d'un catalyseur et qui est immergée dans l'eau.
